# EUROPEAN PATENT SPECIFICATION

(11) **EP 4 195 312 B1**
(45) Date of publication and mention of the grant of the patent: **29.10.2025**
(21) Application number: 21869828.0
(22) Date of filing: 23.09.2021
(51) Int. Cl.: H01M 4/131, H01M 4/36, H01M 4/48, H01M 4/62, H01M 10/052, H01M 4/02, H01M 4/133, H01M 4/134, H01M 4/38, H01M 4/587

(54) **NEGATIVE ELECTRODE AND LITHIUM SECONDARY BATTERY INCLUDING THE SAME**
NEGATIVELEKTRODE UND LITHIUMSEKUNDÄRBATTERIE DAMIT
ÉLECTRODE NÉGATIVE ET BATTERIE SECONDAIRE AU LITHIUM LA COMPRENANT

(30) Priority: 21.09.2020 KR 20200121831
(43) Date of publication of application: 14.06.2023
(73) Proprietor: LG Energy Solution, Ltd., Seoul 07335 (KR)
(72) Inventor: OH, Il-Geun, Daejeon 34122 (KR); SHIN, Sun-Young, Daejeon 34122 (KR); KIM, Dong-Hyuk, Daejeon 34122 (KR); LEE, Yong-Ju, Daejeon 34122 (KR)
(74) Representative: Hoffmann Eitle
(86) International application number: PCT/KR2021/012984
(87) International publication number: WO 2022/060206

(56) References cited:
- EP-A1- 4 020 632
- KR-A- 20150 128 592
- KR-A- 20160 089 858
- KR-A- 20170 090 449
- KR-A- 20190 116 011
- KR-A- 20200 083 808
- KR-A- 20200 100 252
- US-A1- 2016 211 511
- US-A1- 2017 062 804
- YAN WANG ET AL: "Raman spectroscopy of carbon materials: structural basis of observed spectra", CHEMISTRY OF MATERIALS, 1 September 1990 (1990-09-01), pages 557 - 563, XP055179622, Retrieved from the Internet <URL:http://www.chem.ualberta.ca/~mccreery/RLM publication PDFs/mccreery82.pdf> [retrieved on 20240607], DOI: 10.1021/cm00011a018

## Description

### TECHNICAL FIELD

The present disclosure relates to a negative electrode having improve life characteristics and a lithium secondary battery including the same.

The present application claims priority to Korean Patent Application No. 10-2020-0121381 filed on September 21, 2020 in the Republic of Korea.

### BACKGROUND ART

Recently, as mobile instruments, personal computers, electric motors and contemporary capacitor devices have been developed and popularized, high-capacity energy sources have been in increasingly in demand. A typical example of such energy sources includes a lithium secondary battery. Silicon has been given many attentions as a negative electrode material for a next-generation type non-aqueous electrolyte secondary battery, since it has a capacity (about 4200 mAh/g) corresponding to about 10 times or more of the capacity (theoretical capacity: 372 mAh/g) of a graphite-based material used conventionally as a negative electrode material. Thus, it has been suggested that silicon, which is alloyed with lithium and shows high theoretical capacity, as a novel negative electrode active material substituting for a carbonaceous material.

However, silicon undergoes volumetric swelling during charge and volumetric shrinking during discharge. For this, when a secondary battery is charged/discharged repeatedly, silicon used as a negative electrode active material is micronized and shows an increase in isolated particles that lose a conductive path in the electrode, resulting in degradation of the capacity of a secondary battery.

There has been an attempt to carry out micronization of silicon in order to improve cycle characteristics. As a result, it can be expected that cycle characteristics may be improved as micronization proceeds. However, there is a limitation in reducing the crystallite size of crystalline silicon. Thus, it is difficult to sufficiently solve the problem of micronization of silicon during charge/discharge.

As another method for improving cycle characteristics, use of silicon oxide (SiOₓ) has been suggested. Silicon oxide (SiOₓ) forms a structure in which silicon crystals having a size of several nanometers are dispersed homogeneously in silicon oxide, while it is decomposed into Si and SiO₂ by disproportionation at a high temperature of 1,000°C or higher. It is expected that when applying such silicon oxide to a negative electrode active material for a secondary battery, the silicon oxide provides a low capacity corresponding to approximately a half of the capacity of a silicon negative electrode active material but shows a capacity approximately 5 times higher than the capacity of a carbonaceous negative electrode active material. **In** addition, it shows a small change in volume during charge/discharge structurally to provide excellent cycle life characteristics. However, silicon oxide undergoes reaction with lithium upon the initial charge to produce lithium silicide and lithium oxide (lithium oxide and lithium silicate). Particularly, lithium oxide cannot participate in the subsequent electrochemical reactions and a part of lithium transported to a negative electrode upon the initial charge cannot be returned to a positive electrode, and thus irreversible reaction occurs. In the case of silicon oxide, it shows high irreversible capacity as compared to the other silicon-based negative electrodes and provides a significantly low initial charge efficiency (ICE, ratio of initial discharge capacity to charge capacity) of 70-75%. Such low initial efficiency requires excessive capacity of a positive electrode, when manufacturing a secondary battery, to cause a setoff of the capacity per unit weight of a negative electrode.

In addition, when using silicon oxide as a negative electrode active material, use of carbon nanotubes (CNTs) as a conductive material functions to improve electroconductivity and to inhibit an electrical short-circuit. However, carbon nanotubes are separated from the surface of silicon oxide after undergoing volumetric shrinking/swelling, resulting in an electrical short-circuit.

Therefore, there still has been a need for developing a silicon oxide-based material which reduces production of lithium oxide causing such irreversibility, and thus can satisfy life characteristics as well as initial capacity/efficiency, when using silicon oxide as a negative electrode active material.

EP 4 020 632 relates to a negative electrode active material including a silicon-based core particle and an outer carbon coating layer formed on the silicon-based core particle, wherein the outer carbon coating layer contains graphene having a D/G ratio of 0.35 or less in the Raman spectrum.

### DISCLOSURE

### Technical Problem

The present disclosure is directed to providing a negative electrode active material having excellent initial capacity/efficiency and life characteristics, and a negative electrode and lithium secondary battery including the same. These and other objects and advantages of the present disclosure may be understood from the following detailed description and will become more fully apparent from the exemplary embodiments of the present disclosure. Also, it will be easily understood that the objects and advantages of the present disclosure may be realized by the means shown in the appended claims and combinations thereof.

### Technical Solution

In one aspect of the present disclosure, there is provided a negative electrode, including:
a current collector; and
a negative electrode active material layer disposed on at least one surface of the current collector, and including: 1) a negative electrode active material layer including a Mg-containing silicon oxide, a carbon coating layer surrounding the surface of the Mg-containing silicon oxide and a graphene coating layer surrounding the surface of the carbon coating layer, 2) a conductive material including single-walled carbon nanotubes (SWCNTs), and 3) a binder,
wherein the graphene contained in the graphene coating layer has a D/G band intensity ratio of 0.8-1.5, and
the D/G band intensity ratio of the graphene is defined as an average value of the ratio of the maximum peak intensity of D band at 1360 ± 50 cm⁻¹ based on the maximum peak intensity of G band at 1580 ± 50 cm⁻¹, as determined by Raman spectroscopy of graphene as described below;
characterized in that the content of the single-walled carbon nanotubes is 0.01-0.06 wt% based on the total weight of the negative electrode active material layer.

In another aspect of the present disclosure, there is provided a lithium secondary battery including the negative electrode of the first aspect.

### Advantageous Effects

In the negative electrode according to an embodiment of the present disclosure, a graphene coating layer is further introduced to the surface of a Mg-containing silicon oxide, in addition to the conventional carbon coating layer, and single-walled carbon nanotubes (SWCNTs) are used as a conductive material. Therefore, since the graphene coating layer shows excellent affinity with the single-walled carbon nanotubes and excellent flexibility, it is possible to prevent an electrical short-circuit, even when the silicon oxide undergoes shrinking/swelling, and thus to realize an excellent effect of improving life characteristics.

In addition, since the graphene coating layer is retained even under the volumetric swelling and shrinking of the Mg-containing silicon oxide, it is possible to prevent the Mg-containing silicon oxide from being exposed directly to an electrolyte, and thus to prevent deterioration of the Mg-containing silicon oxide under the condition of high-temperature storage.

Further, since the carbon coating layer and the graphene coating layer are provided in combination on the surface of the Mg-containing silicon oxide, it is possible to inhibit volumetric swelling of the Mg-containing silicon oxide by the carbon coating and to maintain an electrical network through the flexibility of graphene, even after shrinking. As a result, it is possible to realize synergic effects, such as improvement of the life characteristics and high-temperature storage characteristics of a secondary battery.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing. Meanwhile, shapes, sizes, scales or proportions of some constitutional elements in the drawings may be exaggerated for the purpose of clearer description.
FIG. 1 is a schematic view illustrating lithiation and delithiation of the conventional silicon oxide (a) provided with a carbon coating layer and the negative electrode active material (b) according to an embodiment of the present disclosure.
FIG. 2 is a schematic view illustrating lithiation and delithiation of the conventional negative electrode (a) including silicon oxide provided with a carbon coating layer and the negative electrode (b) including the negative electrode active material according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure as set out in the appended claims.

Throughout the specification, the expression 'a part includes an element' does not preclude the presence of any additional elements but means that the part may further include the other elements.

**In** one aspect of the present disclosure, there is provided a negative electrode, including:
a current collector; and
a negative electrode active material layer disposed on at least one surface of the current collector, and including: 1) a negative electrode active material including a Mg-containing silicon oxide, a carbon coating layer surrounding the surface of the Mg-containing silicon oxide and a graphene coating layer surrounding the surface of the carbon coating layer, 2) a conductive material including single-walled carbon nanotubes (SWCNTs), and 3) a binder,
wherein the graphene contained in the graphene coating layer has a D/G band intensity ratio of 0.8-1.5, and
the D/G band intensity ratio of the graphene is defined as an average value of the ratio of the maximum peak intensity of D band at 1360 ± 50 cm⁻¹ based on the maximum peak intensity of G band at 1580 ± 50 cm⁻¹, as determined by Raman spectroscopy of graphene.

The negative electrode active material includes a Mg-containing silicon oxide corresponding to a core portion, and a carbon coating layer and a graphene coating layer partially or totally surrounding the outside of the core portion and corresponding to a shell portion.

One of the shell portion, i.e. the carbon coating layer, includes a carbonaceous material, which may be bound to, attached to or coated on the surface of the core portion. The carbonaceous material may include at least one selected from the group consisting of crystalline carbon, natural graphite, artificial graphite, graphene, kish graphite, graphitizable carbon fibers, graphitizable mesocarbon microbeads and amorphous carbon. **In** addition, the carbonaceous material may include a product obtained by heat treating or firing at least one selected from the group consisting of soft carbon, hard carbon, pyrolytic carbon, mesophase pitch-based carbon fibers, mesocarbon microbeads, mesophase pitch, petroleum or coal tar pitch-derived cokes and activated carbon.

**In** addition, the graphene coating layer includes graphene, wherein the graphene may be bound to, attached to or coated on the surface of the carbon coating layer. While lithium ions are intercalated to and deintercalation from the Mg-containing silicon oxide, the graphene coating layer is retained on the surface of the Mg-containing silicon oxide even when the Mg-containing silicon oxide repeatedly undergoes volumetric swelling and shrinking. Therefore, the silicon oxide is prevented from being exposed directly to an electrolyte, and thus may be prevented from being deteriorated even under a high-temperature storage condition. Herein, the reason why the graphene coating layer is retained on the surface of the Mg-containing silicon oxide even when the Mg-containing silicon oxide repeatedly undergoes volumetric swelling and shrinking is that the graphene coating layer has flexibility, and thus it is not broken but is shrunk again even when it is swelled and then shrunk.

Herein, the graphene has a D/G band intensity ratio of 0.8-1.5, wherein the D/G band intensity ratio of the graphene is defined as an average value of the maximum peak intensity of D band at 1360 ± 50 cm⁻¹ based on the maximum peak intensity of G band at 1580 ± 50 cm⁻¹, as determined by Raman spectroscopy of graphene.

Particularly, D band at 1360 ± 50 cm⁻¹ shows the presence of carbon particles and characteristics of incomplete and random walls, while G band at 1580 ± 50 cm⁻¹ shows a continuous type of carbon-carbon (C-C) bonds, which represents the characteristics of a crystalline layer of graphene.

It is possible to evaluate the randomness or defective degree of graphene through the intensity ratio (D/G intensity ratio) of D band peak to G band peak. When the intensity ratio is high, it can be evaluated that graphene is highly random or defective. When the intensity ratio is low, it can be evaluated that graphene has low defects and a high crystallinity. Herein, the term 'defect' refers to an incomplete portion, such as lattice defect, of graphene array caused by insertion of an undesired atom as impurity, deficiency of a desired carbon atom or generation of dislocation in a carbon-carbon bond forming graphene. For this, the defective portion may be cleaved with ease by external stimulation.

For example, the intensity of D-band peak and that of G-band peak may be defined as the height of mean value of X-axis or the area of lower part of the peak in the Raman spectrum. Considering easiness of determination, the height of mean value of X-axis may be adopted.

The D/G band intensity ratio of the graphene is 0.8-1.5, and according to an embodiment of the present disclosure, the D/G band intensity ratio may be 0.8-1.4, 1-1.4, 0.8-1.32, 0.8-1.31, 0.8-1.22, 0.8-1.12, 1-1.32, 1-1.31, or 1.12-1.22.

When the D/G band intensity ratio satisfies the above-defined range, the graphene is oxidized to a certain degree and has defects, and thus shows increased hydrophilicity so that it may be adsorbed well to the Mg-containing silicon oxide to increase the graphene coverage of the Mg-containing silicon oxide advantageously.

In addition, when the D/G band intensity ratio of graphene is less than 0.8, the graphene shows a reduced oxidization degree to provide reduced adsorptivity. When the D/G band intensity ratio is larger than 1.5, the graphene shows high adsorptivity, but provides reduced electrical conductivity and increased side reaction sites, resulting in a decrease in efficiency undesirably.

According to an embodiment of the present disclosure, the content of the graphene coating layer may be 0.5-10 wt%, 0.7-9.7 wt%, 1-9.7 wt%, 2.9-9.7 wt%, 4.8-9.7 wt%, 1-4 wt%, 1-3 wt%, or 1-2.9 wt%, based on the total weight of the negative electrode active material. When the content of the graphene coating layer satisfies the above-defined range, it is possible to cover the surface of the Mg-containing silicon oxide sufficiently, while not causing a decrease in capacity and efficiency.

The content of the carbon coating layer may be 0.5-10 wt%, 0.7-7 wt%, 1-5 wt%, 2-4 wt%, 3-4 wt%, 3.5-3.8 wt%, 3.5-3.7 wt%, or 3.7-3.8 wt%, based on the total weight of the negative electrode active material.

When the content of the carbon coating layer satisfies the above-defined range, the carbon coating layer may cover the Mg-containing silicon oxide suitably to improve electroconductivity, may prevent the Mg-containing silicon oxide from reacting with water, may prevent the problem of degradation of initial capacity and efficiency, caused by formation of an excessive amount of carbon coating layer, and may inhibit volumetric swelling of the Mg-containing silicon oxide desirably.

Since the carbon coating layer is provided in combination with the graphene coating layer on the surface of the Mg-containing silicon oxide, it is possible to inhibit volumetric swelling of the Mg-containing silicon oxide by the carbon coating and to maintain an electrical network through the flexibility of graphene, even after shrinking. As a result, it is possible to realize synergic effects, such as improvement of the life characteristics and high-temperature storage characteristics of a secondary battery.

The Mg-containing silicon oxide includes magnesium silicate (Mg-silicate) containing Si and Mg, and may further include Si and a silicon oxide represented by SiOₓ (0 < x ≤ 2). The Mg-silicate includes MgSiO₃ and Mg₂SiO₄. As a result, the negative electrode active material according to the present disclosure shows peaks of Mg₂SiO₄ and MgSiO₃ at the same time and shows no peak of MgO, as determined by X-ray diffractometry. When peaks of MgO are further observed, gas generation may occur, since MgO reacts with water upon slurry mixing in an aqueous system. Additionally, since MgO is present in a state non-bound with SiO₂ causing irreversibility, it is not possible to improve initial efficiency sufficiently. Further, there is no effect of inhibiting swelling during Li intercalation/deintercalation, resulting in degradation of battery performance.

In addition, the ratio of peak intensity, I (Mg₂SiO₄)/I (MgSiO₃), which is intensity I (Mg₂SiO₄) of peaks that belong to Mg₂SiO₄ to intensity I (MgSiO₃) of peaks that belong to MgSiO₃ is smaller than 1, wherein the peaks that belong to Mg₂SiO₄ are observed at 2θ = 32.2 ± 0.2°, and the peaks that belong to MgSiO₃ are observed at 2θ = 30.9 ± 0.2°.

Particularly, the ratio, I (Mg₂SiO₄)/I (MgSiO₃) may be 0.1-0.9, and more particularly 0.2-0.7. The reason why magnesium silicate, obtained by reaction of SiO with Mg, is used instead of SiO alone is to improve initial efficiency. SiO shows higher capacity as compared to graphite but provides lower initial efficiency. Thus, it is required to increase initial efficiency of SiO in order to increase the capacity of an actual battery to the highest degree. The degree of effect of improving initial efficiency may vary with the amount of Mg bound to SiOₓ (0 < x < 2). When the peak intensity ratio, I (Mg₂SiO₄)/I (MgSiO₃) satisfies the above-defined range, it is possible to form a large amount of MgSiO₃ upon reaction of SiO with the same amount of Mg, and thus to provide a higher effect of improving initial efficiency as compared to formation of Mg₂SiO₄.

The peaks that belong to Mg₂SiO₄ are observed at 2θ = 32.2 ± 0.2°, and the peaks that belong to MgSiO₃ are observed at 2θ = 30.9 ± 0.2°. Herein, the peaks may be observed through X-ray diffractometry (XRD) using a Cu(Kα-ray) (wavelength: 1.54 Å) source.

In the Mg-containing silicon oxide, Mg, magnesium silicate and silicon oxide are present in such a state that the elements of each phase are diffused so that the boundary surface of one phase is bound to that of another phase (i.e., the phases are bound to each other in an atomic level), and thus undergo little change in volume during lithium-ion intercalation/deintercalation and cause no cracking of silicon oxide-based composite particles even after repeating charge/discharge.

In addition, according to an embodiment of the present disclosure, the Mg-containing silicon oxide may include Mg in an amount of 4-15 wt%, particularly 4-10 wt%, 4-8 wt%, 8-10 wt%, or 8-15 wt%. When Mg content satisfies the above-defined range, it is possible to improve efficiency, while minimizing a decrease in capacity. It is also possible to prevent production of MgO as a byproduct, and to reduce pores in the internal structure to facilitate improvement of life characteristics.

According to an embodiment of the present disclosure, the Mg-containing silicon oxide powder may have an average particle diameter (D₅₀), i.e. the particle diameter at 50% in the volume accumulated particle size distribution of 0.1-20 µm, particularly 0.5-10 µm. In addition, the Mg-containing silicon oxide powder may have a particle diameter (D₉₀) at 90% in the volume accumulated particle size distribution of 30 µm or less, particularly 15 µm or less, and more particularly 10 µm or less. In addition, the Mg-containing silicon oxide powder may have the maximum particle diameter in the volume accumulated particle size distribution of 35 µm or less, particularly 25 µm or less. For example, the 50% particle diameter, 90% particle diameter and the maximum particle diameter in the volume accumulated particle size distribution may be obtained from accumulated frequency, as determined by using a currently used laser diffraction particle size distribution analyzer.

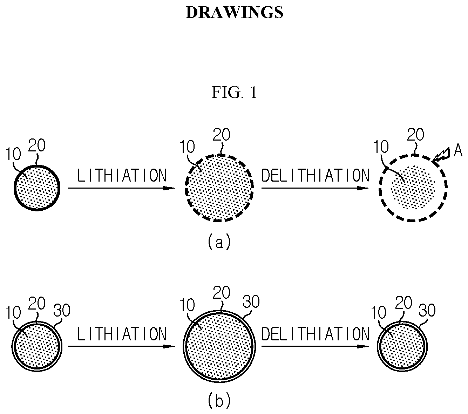

Referring to FIG. 1, portion (a) shows a schematic view illustrating lithiation and delithiation of the conventional negative electrode active material provided with a carbon coating layer 20 on the surface of Mg-containing silicon oxide 10, and portion (b) shows a schematic view illustrating lithiation and delithiation of the negative electrode active material provided with a carbon coating layer 20 and a graphene coating layer 30 successively on the surface of Mg-containing silicon oxide 10 according to an embodiment of the present disclosure.

Referring to portion (a) of FIG. 1, lithium is intercalated to the conventional negative electrode active material during charge (i.e. the negative electrode active material is lithiated) to cause swelling of the Mg-containing silicon oxide 10, and then the Mg-containing silicon oxide 10 is shrunk after delithiation (lithium deintercalation) so that it may be return to its original size, but the carbon coating layer 20 is not restored into its original size. As a result, the surface A of the Mg-containing silicon oxide, not coated with the carbon coating layer but exposed directly, reacts with an electrolyte, which may cause deterioration of the silicon oxide.

On the contrary, in portion (b) of FIG. 1 illustrating the negative electrode active material provided with a carbon coating layer 20 and a graphene coating layer 30 on the surface of Mg-containing silicon oxide 10 according to an embodiment of the present disclosure, the Mg-containing silicon oxide 10 is swelled after lithium is intercalated (i.e. lithiation occurs), and then the carbon coating layer formed on the surface of the Mg-containing silicon oxide 10 may be cracked partially when lithium is deintercalated (i.e. delithiation occurs) and the Mg-containing silicon oxide 10 is shrunk and returned to its original size. However, the graphene coating layer 30 is retained as it is on the surface of the Mg-containing silicon oxide 10. Therefore, it is possible to prevent the problem of deterioration of the silicon oxide caused by exposure to an electrolyte.

Hereinafter, the method for preparing a negative electrode active material according to an embodiment of the present disclosure will be explained in more detail.

The method for preparing a negative electrode active material according to an embodiment of the present disclosure includes the steps of:
carrying out reaction of SiOₓ (0 < x < 2) gas with Mg gas and cooling the reaction mixture at 400-900°C to deposit a Mg-containing silicon oxide;
pulverizing the deposited Mg-containing silicon oxide;
introducing a carbonaceous material feed gas to the pulverized Mg-containing silicon oxide and carrying out heat treatment at 850-1,150°C for 30 minutes to 8 hours to form a carbon coating layer including a carbonaceous material on the surface of the Mg-containing silicon oxide; and
mixing the Mg-containing silicon oxide having a carbon coating layer with aqueous graphene dispersion and carrying out spray drying to form a graphene coating layer on the surface of the carbon coating layer.

According to an embodiment of the present disclosure, the SiOₓ (0 < x < 2) gas may be prepared by allowing Si and SiO₂ to evaporate at 1,000-1,800°C, and the Mg gas may be prepared by allowing Mg to evaporate at 800-1,600°C.

The reaction of SiOₓ (0 < x < 2) gas with Mg gas may be carried out at 800-1800°C. Then, quenching may be carried out to a target cooling temperature of 400-900°C, particularly 500-800°C, within 1-6 hours. When the quenching time satisfies the above-defined range after the vapor phase reaction of SiOₓ (0 < x < 2) gas with Mg gas, such quenching to a low temperature within a short time can solve the problem of insufficient reaction of Mg with SiOₓ which results in a failure in formation of silicate and a residual undesired phase, such as MgO. Thus, it is possible to significantly improve the initial efficiency and an effect of preventing swelling, thereby providing significantly improved life of a battery.

After cooling, heat treatment may be further carried out, wherein the size of Si crystallites and Mg-silicate proportion may be controlled depending on heat treatment temperature. For example, when the additional heat treatment is carried out at high temperature, Mg₂SiO₄ phase may be increased and the Si crystallite size may be increased.

According to an embodiment of the present disclosure, the deposited Mg-containing silicon oxide may include a crystalline silicon phase and a matrix in which the silicon phases are scattered, wherein the matrix includes Mg-silicate and silicon-oxide.

Next, the Mg-containing silicon oxide may be pulverized through a mechanical milling process, or the like, to obtain Mg-containing silicon oxide powder as a core portion having a particle diameter (D₅₀) of 0.1-20 µm.

Then, a carbonaceous material feed gas is introduced to the pulverized Mg-containing silicon oxide and heat treatment is carried out at 850-1,150°C for 30 minutes to 8 hours to form a carbon coating layer including a carbonaceous material on the surface of the Mg-containing silicon oxide. Herein, methane gas may be used as a carbonaceous material feed gas. **In** addition, mixed gas further containing argon gas added thereto may be used, and the carbon coating layer may be formed by using a chemical vapor deposition (CVD) process.

After that, the resultant product is mixed with graphene dispersion, and the resultant mixture is spray dried to form a graphene coating layer as a shell portion.

Herein, the spray drying may be carried out at 150-250°C, 175-225°C, or 200°C.

The negative electrode according to an embodiment of the present disclosure may be obtained by applying and drying a mixture of a negative electrode active material, a conductive material including single-walled carbon nanotubes (SWCNTs) and a binder on a negative electrode current collector. If desired, the mixture may further include a filler. The negative electrode active material includes the above-described negative electrode active material containing a Mg-containing silicon oxide, a carbon coating layer surrounding the surface of the Mg-containing silicon oxide, and a graphene coating layer surrounding the carbon coating layer.

According to the present disclosure, the current collector is formed to have a thickness of 3-500 µm. The current collector is not particularly limited, as long as it causes no chemical change in the corresponding battery and has high conductivity. Particular examples of the current collector may include stainless steel, aluminum, nickel, titanium, baked carbon, aluminum or stainless steel surface-treated with carbon, nickel, titanium or silver, or the like. A suitable current collector may be selected depending on the polarity of a positive electrode or negative electrode.

The binder is an ingredient which assists binding between the electrode active material and the conductive material and binding to the current collector. In general, the binder is added in an amount of 1-50 wt% based on the total weight of the electrode mixture. Particular examples of the binder include polyacrylonitrile-co-acrylate, polyvinylidene fluoride, polyvinyl alcohol, carboxymethyl cellulose (CMC), starch, hydroxypropyl cellulose, regenerated cellulose, polyvinyl pyrrolidone, tetrafluoroethylene, polyethylene, polypropylene, ethylene-propylene-diene terpolymer (EPDM), sulfonated EPDM, styrene butadiene rubber (SBR), polyacrylic acid, polyacrylic acid substituted with an alkali cation or ammonium ion, poly(alkylene-co-maleic anhydride) substituted with an alkali cation or ammonium ion, poly(alkylene-co-maleic acid) substituted with an alkali cation or ammonium ion, polyethylene oxide, fluororubber, or two or more of them. More particularly, the polyacrylic acid substituted with an alkali cation or ammonium ion may be exemplified by lithium-polyacrylic acid (Li-PAA, lithium-substituted polyacrylic acid), and the poly(alkylene-co-maleic anhydride) substituted with an alkali cation or ammonium ion may be exemplified by lithium-substituted polyisobutylene-co-maleic anhydride.

The conductive material essentially includes single-walled carbon nanotubes (SWCNTs). As compared to a carbon coating layer used for the conventional silicon oxide active material, graphene shows high affinity to single-walled carbon nanotubes. Thus, when using single-walled carbon nanotubes as a conductive material, the electrical network between the active material and the conductive material is maintained advantageously during charge/discharge wherein lithium ions are intercalated/deintercalated (i.e. lithiation/delithiation occurs). As a result, it is possible to significantly improve life and high-temperature storage characteristics.

The single-walled carbon nanotube is a material including carbon atoms arranged in a hexagonal shape and forming a tube-like shape, shows properties as a non-conductor, conductor or semi-conductor depending on its unique chirality, provides a tensile strength approximately 100 times higher than the tensile strength of steel by virtue of the carbon atoms linked through strong covalent binding, realizes excellent flexibility and elasticity, and is chemically stable.

The single-walled carbon nanotubes may have an average diameter of 3-10 nm, particularly 5-8 nm. When satisfying the above-defined range, it is possible to realize a preferred level of viscosity and solid content upon the preparation of a conductive material dispersion. The single-walled carbon nanotubes may be entangled with one another to form an aggregate in the conductive material dispersion. Thus, the average diameter may be calculated by determining the diameter of such optional entangled single-walled carbon nanotube aggregate extracted from the conductive material dispersion through scanning electron microscopy (SEM) or transmission electron microscopy (TEM), and dividing the diameter of the aggregate by the number of single-walled carbon nanotubes forming the aggregate.

The single-walled carbon nanotubes may have a BET specific surface area of 200-700 m²/g, particularly 230-600 m²/g, or 250-580 m²/g. When the above-defined range is satisfied, a conductive material dispersion having a desired solid content is derived, and an excessive increase in viscosity of negative electrode slurry is prevented. The BET specific surface area may be determined through the nitrogen adsorption BET method.

The single-walled carbon nanotubes may have an aspect ratio of 100-3,000, particularly 200-2,000 or 250-1,000. When the above-defined range is satisfied, the single-walled carbon nanotubes have a high specific surface area, and thus may be adsorbed to the active material particles with strong attraction force in the negative electrode. Therefore, a conductive network may be maintained smoothly even under the volumetric swelling of the negative electrode active material. The aspect ratio may be determined by calculating the average of the aspect ratios of 15 single-walled carbon nanotubes having a large aspect ratio and 15 single-walled carbon nanotubes having a small aspect ratio.

Since the single-walled carbon nanotubes have a larger aspect ratio, larger length and a larger volume, as compared to multi-walled carbon nanotubes or double-walled carbon nanotubes, they are advantageous in terms of construction of an electrical network with the use of a small amount.

In addition to the single-walled carbon nanotubes, the conductive material may further include an ingredient causing no chemical change in the corresponding battery. Particular examples of the ingredient include: carbon black, such as carbon black, acetylene black, Ketjen black (trade name), carbon nanofibers, channel black, furnace black, lamp black or thermal black; conductive fibers, such as carbon fibers or metallic fibers; metal powder, such as fluorocarbon, aluminum or nickel powder; conductive whisker, such as zinc oxide or potassium titanate; conductive metal oxide, such as titanium oxide; and conductive materials, such as polyphenylene derivatives.

The content of the single-walled carbon nanotubes is 0.01-0.06 wt%, based on the total weight of the negative electrode active material layer. The content of the single-walled carbon nanotubes may be 0.01-0.05 wt%, 0.01-0.04 wt%, or 0.04-0.06 wt%, based on the total weight of the negative electrode active material layer. When the content of the single-walled carbon nanotubes satisfies the above-defined range, it is possible to construct an electrical network sufficiently, while not causing degradation of the initial efficiency of the Mg-containing silicon oxide.

According to an embodiment of the present disclosure, the negative electrode active material layer may further include a carbonaceous active material as a negative electrode active material. The carbonaceous active material may include any one selected from artificial graphite, natural graphite, graphitizable carbon fibers, graphitizable mesocarbon microbeads, petroleum cokes, baked resin, carbon fibers and pyrolyzed carbon, or two or more of them. The carbonaceous material may have an average particle diameter of 25 µm or less, 5-25 µm, or 8-20 µm. When the carbonaceous material has an average particle diameter of 25 µm or less, it is possible to improve room-temperature and low-temperature output characteristics and to facilitate high-rate charge.

The carbonaceous active material may be used in an amount of 70-97 wt%, 75-95 wt%, or 80-93 wt%, based on the total weight of the negative electrode active material layer.

**In** addition, according to an embodiment of the present disclosure, the weight ratio of the negative electrode active material including the Mg-containing silicon oxide, the carbon coating layer surrounding the surface of the Mg-containing silicon oxide and the graphene coating layer surrounding the carbon coating layer (i.e. Mg-containing silicon oxide having a carbon coating layer and a graphene coating layer) to the carbonaceous active material may be 1:2-1:33, 1:3-1:32, 1:4-1:30, or 1:5.7-1:20.

When the carbonaceous active material is used in the negative electrode active material within the above-defined range, it may function as a matrix for the negative electrode active material and contribute to realization of capacity.

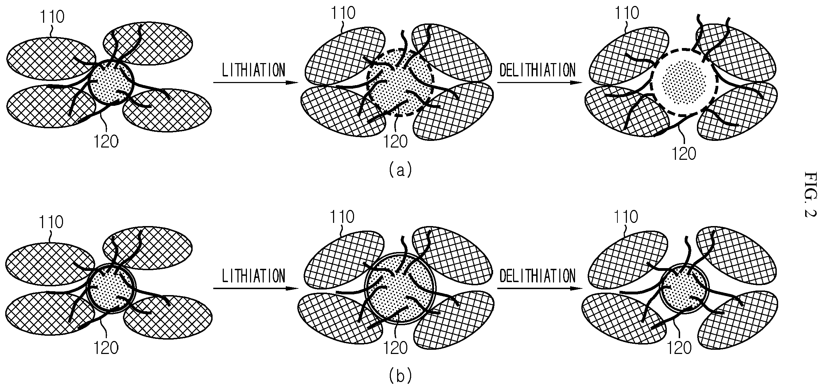

Referring to FIG. 2, portion (a) shows a schematic view illustrating lithiation and delithiation of the negative electrode including the negative electrode active material provided with a carbon coating layer on the surface of Mg-containing silicon oxide as shown in FIG. 1 (a) in combination with graphite 110 and single-walled carbon nanotubes 120 as conductive materials, and portion (b) shows a schematic view illustrating lithiation and delithiation of the negative electrode including the negative electrode active material provided with a carbon coating layer and a graphene coating layer on the surface of Mg-containing silicon oxide according to an embodiment of the present disclosure as shown in FIG. 1(b) in combination with graphite 110 and single-walled carbon nanotubes 120 as conductive materials.

Referring to portion (a) of FIG. 2, the Mg-containing silicon oxide in the conventional negative electrode active material is swelled, when lithium is intercalated (lithiation occurs) during charge, and is shrunk and returned to its original size after delithiation (lithium deintercalation). However, the carbon coating layer is not returned to its original size. As a result, a gap is generated between the Mg-containing silicon oxide and the single-walled carbon nanotubes 120 and graphite 110 bound to the carbon coating layer, resulting in an electrical short-circuit.

On the contrary, in portion (b) or FIG. 2, the Mg-containing silicon oxide in the negative electrode active material according to an embodiment of the present disclosure is swelled after lithium intercalation (lithiation). Then, even when lithium deintercalation (delithiation) occurs and the Mg-containing silicon oxide is shrunk and returned to its original size, the graphene coating layer is retained as it is, and the electrical network formed between the Mg-containing silicon oxide and the single-walled carbon nanotubes 120 and graphite 110 bound to the graphene coating layer can be still retained. Therefore, in the negative electrode according to an embodiment of the present disclosure, the surface of the Mg-containing silicon oxide is provided with a graphene coating layer having excellent flexibility and high affinity to the single-walled carbon nanotubes, and thus the secondary battery using the negative electrode may provide significantly improved life characteristics and high-temperature storage characteristics.

According to an embodiment of the present disclosure, when manufacturing a negative electrode by applying a mixture of the negative electrode active material, the conductive material and the binder, the negative electrode may be obtained through a dry process by directly applying a solid mixture including the negative electrode active material, the conductive material and the binder. Otherwise, the negative electrode may be obtained through a wet process by adding the negative electrode active material, the conductive material and the binder to a dispersion medium, followed by agitation, applying the resultant mixture in the form of slurry, and removing the dispersion medium through drying, or the like. Herein, particular examples of the dispersion medium used for a wet process may include an aqueous medium, such as water (deionized water, or the like), or an organic medium, such as N-methyl-2-pyrrolidone (NMP) or acetone.

In another aspect, there is provided a lithium secondary battery including a positive electrode, a negative electrode and a separator interposed between the negative electrode and the positive electrode, wherein the negative electrode includes the negative electrode according to an embodiment of the present disclosure.

The positive electrode may be obtained by applying and drying a mixture of a positive electrode active material, a conductive material and a binder on a positive electrode current collector. If desired, the mixture may further include a filler. Particular examples of the positive electrode active material include, but are not limited to: layered compounds such as lithium cobalt oxide (LiCoO₂) and lithium nickel oxide (LiNiO₂), or those compounds substituted with one or more transition metals; lithium manganese oxides such as those represented by the chemical formula of Li₁₊ₓMn₂₋ₓO₄ (wherein x is 0-0.33), LiMnO₃, LiMn₂O₃ and LiMnO₂; lithium copper oxide (Li₂CuO₂); vanadium oxides such as LiV₃O₈, LiV₃O₄, V₂O₅ or Cu₂V₂O₇; Ni-site type lithium nickel oxides represented by the chemical formula of LiNi₁₋ₓMₓO₂ (wherein M is Co, Mn, Al, Cu, Fe, Mg, B or Ga, and x is 0.01-0.3); lithium manganese composite oxides represented by the chemical formula of LiMn₂₋ₓMₓO₂ (wherein M is Co, Ni, Fe, Cr, Zn or Ta, and x is 0.01-0.1) or Li₂Mn₃MO₈ (wherein M is Fe, Co, Ni, Cu or Zn); LiMn₂O₄ in which Li is partially substituted with an alkaline earth metal ion; disulfide compounds; Fe₂(MoO₄)₃; or the like.

The conductive material, the current collector and the binder used for the positive electrode may refer to those described hereinabove with reference to the negative electrode.

The separator is interposed between the positive electrode and the negative electrode, and may be an insulating thin film having high ion permeability and mechanical strength. In general, the separator may have a pore diameter and thickness of 0.01-10 µm and 5-300 µm, respectively. Particular examples of the separator include: olefinic polymers, such as polypropylene having chemical resistance and hydrophobicity; sheets or non-woven webs made of glass fibers or polyethylene; or the like. Meanwhile, the separator may further include a porous layer containing a mixture of inorganic particles with a binder resin, on the outermost surface thereof.

According to an embodiment of the present disclosure, the electrolyte includes an organic solvent and a predetermined amount of lithium salt. Particular examples of the organic solvent include propylene carbonate (PC), ethylene carbonate (EC), butylene carbonate (BC), diethyl carbonate (DEC), dimethyl carbonate (DMC), dipropyl carbonate (DPC), methyl propionate (MP), dimethyl sulfoxide, acetonitrile, dimethoxyethane, diethoxyethane, tetrahydrofuran, N-methyl-2-pyrrolidone (NMP), ethyl methyl carbonate (EMC), gamma-butyrolactone (GBL), flouroethylene carbonate (FEC), methyl formate, ethyl formate, propyl formate, methyl acetate, ethyl acetate, propyl acetate, pentyl acetate, methyl propionate, ethyl propionate, butyl propionate, or a combination thereof. In addition, halogen derivatives of the organic solvents and linear ester compounds may also be used. The lithium salt is an ingredient easily soluble in the non-aqueous electrolyte, and particular examples thereof include LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, (CF₃SO₂)₂NLi, lithium chloroborate, lower aliphatic lithium carboxylate, lithium tetraphenylborate, imides, or the like.

The secondary battery according to the present disclosure may be obtained by receiving and sealing an electrode assembly including positive electrodes and negative electrodes stacked alternatively with separators interposed therebetween in a casing material, such as a battery casing, together with an electrolyte. Any conventional methods for manufacturing a secondary battery may be used with no particular limitation.

In still another aspect, there are provided a battery module including the secondary battery as a unit cell, and a battery pack including the battery module. Since the battery module and battery pack include a secondary battery which shows excellent quick charging characteristics at a high loading amount, they may be used as power sources for electric vehicles, hybrid electric vehicles, Plug-In hybrid electric vehicles and power storage systems. Among such secondary batteries, lithium secondary batteries, including lithium metal secondary batteries, lithium-ion secondary batteries, lithium polymer secondary batteries or lithium-ion polymer secondary batteries, are preferred.

Meanwhile, reference will be made to description of the elements used conventionally in the field of a battery, particularly a lithium secondary battery, about the battery elements not described herein, such as a conductive material.

Hereinafter, the present disclosure will be explained in detail with reference to Examples. The following examples may, however, be embodied in many different forms and should not be construed as limited to the exemplary embodiments set forth therein. Rather, these exemplary embodiments are provided so that the present disclosure will be thorough and complete, and will fully convey the scope of the present disclosure to those skilled in the art.

### Example 1

### (1) Preparation of Negative Electrode Active Material

Silicon powder and silicon dioxide (SiO₂) powder were mixed homogeneously at a molar ratio of 1:1, and the resultant mixture was heat treated at 1,400°C under reduced pressure atmosphere of 1 torr to prepare with SiOₓ (0 < x < 2) gas, and Mg was heat treated at 900°C to prepare Mg gas.

The resultant SiOₓ (0 < x < 2) gas and Mg gas were allowed to react at 1,300°C for 3 hours and then cooled to 800°C within 4 hours to deposit the product. Then, the resultant product was pulverized by a jet mill to recover Mg-containing silicon oxide powder having an average particle diameter (D₅₀) of 5 µm.

The recovered Mg-containing silicon oxide powder was heated at a rate of 5°C/min by using a tube-like electric furnace and subjected to chemical vapor deposition (CVD) treatment at 950°C in the presence of a mixed gas of argon (Ar) with methane (CH₄) for 2 hours to obtain a Mg-containing silicon oxide having a carbon coating layer.

The obtained Mg-containing silicon oxide having a carbon coating layer was agitated with aqueous graphene dispersion by using a wet mixer instrument, and the resultant mixture was spray dried at 200°C to obtain a Mg-containing silicon oxide having a graphene coating layer and a carbon coating layer as a negative electrode active material.

Herein, the content of the Mg-containing silicon oxide, the content of the carbon coating layer and the content of the graphene coating layer based on the total weight of the negative electrode active material are shown in the following Table 1. **In** addition, the D/G band intensity ratio of the graphene coating layer is also shown in Table 1.

The negative electrode active material was analyzed by inductive coupled plasma-atomic emission spectroscopy (ICP-AES). It was shown that the negative electrode active material had a Mg concentration of 8 wt%.

### (2) Manufacture of Secondary Battery

The resultant negative electrode active material : artificial graphite : conductive material (carbon black) : conductive material (single-walled carbon nanotubes, SWCNTs) : carboxymethyl cellulose (CMC) : styrene butadiene rubber (SBR) were introduced to water as a dispersion medium at a weight ratio of 14.3 : 81 : 0.96 : 0.04 : 1.2 : 2.5 to prepare a negative electrode mixture slurry. Herein, the single-walled carbon nanotubes had an average diameter of 20 nm, a specific surface area of 580 m²/g and an aspect ratio of 250.

The negative electrode mixture slurry was coated uniformly on both surfaces of copper foil having a thickness of 20 µm. The coating was carried out at a drying temperature of 70°C and a coating rate of 0.2 m/min. Then, the negative electrode mixture layer was pressed to a porosity of 28% by using a roll press device to accomplish a target thickness. Then, drying was carried out in a vacuum oven at 130°C for 8 hours to obtain a negative electrode.

Then, 96.7 parts by weight of Li[Ni_{0.6}Mn_{0.2}Co_{0.2}]O₂ as a positive electrode active material, 1.3 parts by weight of graphite as a conductive material, and 2.0 parts by weight of polyvinylidene fluoride (PVdF) as a binder were dispersed in 1-methyl-2-pyrrolidone as a dispersion medium to prepare a positive electrode mixture slurry. The slurry was coated on both surfaces of aluminum foil having a thickness of 20 µm. The coating was carried out at a drying temperature of 80°C and a coating rate of 0.2 m/min. Then, the positive electrode mixture layer was pressed to a porosity of 24% by using a roll press device to accomplish a target thickness. Then, drying was carried out in a vacuum oven at 130°C for 8 hours to obtain a positive electrode.

A porous film (30 µm, Celgard) made of polypropylene was interposed between the resultant negative electrode and positive electrode to form an electrode assembly, an electrolyte was injected thereto, and then the electrode assembly was allowed to stand for 30 hours so that the electrolyte might infiltrate into the electrode sufficiently. The electrolyte was prepared by dissolving LiPF₆ in an organic solvent containing a mixture of ethylene carbonate (EC) with ethylmethyl carbonate (EMC) at 3:7 (volume ratio) to a concentration of 1.0 M, and adding vinylene carbonate (VC) thereto at a concentration of 2 wt%.

### Example 2

A negative electrode active material was obtained in the same manner as Example 1, except that the content of the Mg-containing silicon oxide, the content of the carbon coating layer, the content of the graphene coating layer and the D/G band intensity ratio of the graphene coating layer were changed as shown in Table 1.

A negative electrode, a positive electrode and a secondary battery were obtained in the same manner as Example 1, except that the resultant negative electrode active material : artificial graphite : conductive material (carbon black) : conductive material (single-walled carbon nanotubes, SWCNTs) : carboxymethyl cellulose (CMC) : styrene butadiene rubber (SBR) were introduced to water as a dispersion medium at a weight ratio of 14.3 : 81 : 0.96 : 0.04 : 1.2 : 2.5 to prepare a negative electrode mixture slurry.

### Example 3

A negative electrode active material was obtained in the same manner as Example 1, except that the content of the Mg-containing silicon oxide, the content of the carbon coating layer, the content of the graphene coating layer and the D/G band intensity ratio of the graphene coating layer were changed as shown in Table 1.

A negative electrode, a positive electrode and a secondary battery were obtained in the same manner as Example 1, except that the negative electrode active material obtained as described above was used.

### Example 4

A negative electrode active material was obtained in the same manner as Example 1, except that the content of the Mg-containing silicon oxide, the content of the carbon coating layer, the content of the graphene coating layer and the D/G band intensity ratio of the graphene coating layer were changed as shown in Table 1.

A negative electrode, a positive electrode and a secondary battery were obtained in the same manner as Example 1, except that the negative electrode active material obtained as described above was used.

### Example 5

A negative electrode active material was obtained in the same manner as Example 1, except that the content of the Mg-containing silicon oxide, the content of the carbon coating layer, the content of the graphene coating layer and the D/G band intensity ratio of the graphene coating layer were changed as shown in Table 1.

A negative electrode, a positive electrode and a secondary battery were obtained in the same manner as Example 1, except that the negative electrode active material obtained as described above was used.

### Example 6

A negative electrode active material was obtained in the same manner as Example 1, except that the content of the Mg-containing silicon oxide, the content of the carbon coating layer, the content of the graphene coating layer and the D/G band intensity ratio of the graphene coating layer were changed as shown in Table 1.

A negative electrode, a positive electrode and a secondary battery were obtained in the same manner as Example 1, except that the negative electrode active material obtained as described above was used.

### Example 7

A negative electrode active material was obtained in the same manner as Example 1, except that the content of the Mg-containing silicon oxide, the content of the carbon coating layer, the content of the graphene coating layer and the D/G band intensity ratio of the graphene coating layer were changed as shown in Table 1.

A negative electrode, a positive electrode and a secondary battery were obtained in the same manner as Example 1, except that the negative electrode active material obtained as described above was used.

### Comparative Example 1

A negative electrode active material was obtained in the same manner as Example 1, except that the content of the Mg-containing silicon oxide, the content of the carbon coating layer, the content of the graphene coating layer and the D/G band intensity ratio of the graphene coating layer were changed as shown in Table 1.

A negative electrode, a positive electrode and a secondary battery were obtained in the same manner as Example 1, except that the resultant negative electrode active material : artificial graphite : conductive material (carbon black) : conductive material (single-walled carbon nanotubes, SWCNTs) : carboxymethyl cellulose (CMC) : styrene butadiene rubber (SBR) were introduced to water as a dispersion medium at a weight ratio of 14.3 : 81 : 1 : 0 : 1.2 : 2.5 to prepare a negative electrode mixture slurry.

### Comparative Example 2

A negative electrode active material was obtained in the same manner as Example 1, except that the content of the Mg-containing silicon oxide, the content of the carbon coating layer, the content of the graphene coating layer and the D/G band intensity ratio of the graphene coating layer were changed as shown in Table 1.

A negative electrode, a positive electrode and a secondary battery were obtained in the same manner as Example 1, except that the resultant negative electrode active material : artificial graphite : conductive material (carbon black) : conductive material (single-walled carbon nanotubes, SWCNTs) : carboxymethyl cellulose (CMC) : styrene butadiene rubber (SBR) were introduced to water as a dispersion medium at a weight ratio of 14.3 : 81 : 1 : 0 : 1.2 : 2.5 to prepare a negative electrode mixture slurry.

### Comparative Example 3

A negative electrode active material was obtained in the same manner as Example 1, except that no graphene coating layer was formed, and the content of the Mg-containing silicon oxide and the content of the carbon coating layer were changed as shown in Table 1.

A negative electrode, a positive electrode and a secondary battery were obtained in the same manner as Example 1, except that the resultant negative electrode active material : artificial graphite : conductive material (carbon black) : conductive material (single-walled carbon nanotubes, SWCNTs) : carboxymethyl cellulose (CMC) : styrene butadiene rubber (SBR) were introduced to water as a dispersion medium at a weight ratio of 14.3 : 81 : 0.96 : 0.04 : 1.2 : 2.5 to prepare a negative electrode mixture slurry.

### Comparative Example 4

A negative electrode active material was obtained in the same manner as Example 1, except that no graphene coating layer was formed, and the content of the Mg-containing silicon oxide and the content of the carbon coating layer were changed as shown in Table 1.

A negative electrode, a positive electrode and a secondary battery were obtained in the same manner as Example 1, except that the resultant negative electrode active material : artificial graphite : conductive material (carbon black) : conductive material (single-walled carbon nanotubes, SWCNTs) : carboxymethyl cellulose (CMC) : styrene butadiene rubber (SBR) were introduced to water as a dispersion medium at a weight ratio of 14.3 : 81 : 0.92 : 0.08 : 1.2 : 2.5 to prepare a negative electrode mixture slurry.

### Comparative Example 5

A negative electrode active material was obtained in the same manner as Example 1, except that graphene having a D/G band intensity ratio of 0.7 was used.

Then, a negative electrode, a positive electrode and a secondary battery were obtained in the same manner as Example 1.

### Comparative Example 6

A negative electrode active material was obtained in the same manner as Example 1, except that graphene having a D/G band intensity ratio of 1.6 was used.

Then, a negative electrode, a positive electrode and a secondary battery were obtained in the same manner as Example 1.

### Comparative Example 7

A negative electrode active material was obtained in the same manner as Example 1, except that no graphene coating layer was formed, and the content of the Mg-containing silicon oxide and the content of the carbon coating layer were changed as shown in Table 1.

A negative electrode, a positive electrode and a secondary battery were obtained in the same manner as Example 1, except that the resultant negative electrode active material : artificial graphite : conductive material (carbon black) : conductive material (single-walled carbon nanotubes, SWCNTs) : carboxymethyl cellulose (CMC) : styrene butadiene rubber (SBR) were introduced to water as a dispersion medium at a weight ratio of 14.3 : 81 : 0.92 : 0.08 : 1.2 : 2.5 to prepare a negative electrode mixture slurry.

### Comparative Example 8

A negative electrode active material was obtained in the same manner as Example 1, except that no graphene coating layer was formed, and the content of the Mg-containing silicon oxide and the content of the carbon coating layer were changed as shown in Table 1.

A negative electrode, a positive electrode and a secondary battery were obtained in the same manner as Example 1, except that the resultant negative electrode active material : artificial graphite : conductive material (carbon black) : conductive material (single-walled carbon nanotubes, SWCNTs) : carboxymethyl cellulose (CMC) : styrene butadiene rubber (SBR) were introduced to water as a dispersion medium at a weight ratio of 14.3 : 81 : 0.92 : 0.08 : 1.2 : 2.5 to prepare a negative electrode mixture slurry.

### Test Examples

### Test Example 1: Determination of D/G Band Intensity Ratio of Graphene

The D/G band intensity ratio of the graphene in the graphene coating layer provided in each of the negative electrode active materials according to Examples 1-7 and Comparative Examples 1-8 was determined by measuring the integral values of D band and G band of each sample through Raman spectroscopy using laser with a wavelength of 532 nm at an interval of 25 points, and calculating the D/G band intensity ratio from the values.

Herein, the D/G band intensity ratio of graphene is defined as an average value of the ratio of the maximum peak intensity of D band at 1360 ± 50 cm⁻¹ based on the maximum peak intensity of G band at 1580 ± 50 cm⁻¹, as determined by Raman spectroscopy of graphene.

The D/G band intensity ratio of the graphene is shown in the following Table 1.

### Test Example 2: Capacity Retention after High-Temperature Storage (8 weeks) at 60°C

Each of the secondary batteries according to Examples 1-7 and Comparative Examples 1-8 was evaluated in terms of the capacity retention after high-temperature storage (8 weeks) at 60°C as follows.

The capacity at the first charge/discharge cycle was determined and taken as a criterion. Each battery was charged fully, stored in a high-temperature chamber at 60°C for 8 hours, and discharged. Then, the capacity retention of the discharge capacity obtained by repeating one cycle of charge/discharge was calculated.
Charge conditions: constant current (CC)/constant voltage (CV), 0.3 C, 4.25 V, 0.05 C cut off
Discharge conditions: CC 0.3 C, 2.5 V cut off
The test results are shown in Table 1.

### Test Example 3: High-Temperature (45°C) Capacity Retention (300^{th} Cycle)

Each of the secondary batteries according to Examples 1-7 and Comparative Examples 1-8 was evaluated in terms of the high temperature (45°C) capacity retention at the 300^{th} cycle as follows.
Charge conditions: CC/CV, 1 C, 4.25 V, 0.05 C cut off
Discharge conditions: CC 1 C, 2.5 V cut off
The capacity retention was defined by the following formula. Capacity retention (%) = [Discharge capacity at the 300th cycle/Discharge capacity at the 2nd cycle] X 100

**[Table 1]**

| | Negative electrode active material and conductive material | | | | | Test results of secondary battery | |
|---|---|---|---|---|---|---|---|
| | Content of Mg-containing silicon oxide (wt%) | Content of carbon coating layer (wt%) | D/G band intensity ratio of graphene | Content of graphene coating layer (wt%) | Content of SW-CNT (wt%) | Capacity retention after 60°C high-temperature storage (8 weeks) (%) | Capacity retention at high temperature (45°C) (300^{th} cycle) (%) |
| Ex. 1 | 93.4 | 3.7 | 1.31 | 2.9 | 0.04 | 93 | 91 |
| Ex. 2 | 95.2 | 3.8 | 1.32 | 1.0 | 0.04 | 92 | 90 |
| Ex. 3 | 93.4 | 3.7 | 0.8 | 2.9 | 0.04 | 91 | 90 |
| Ex. 4 | 93.4 | 3.7 | 1.5 | 2.9 | 0.04 | 89 | 89 |
| Ex. 5 | 91.5 | 3.7 | 1.22 | 4.8 | 0.06 | 92 | 90 |
| Ex. 6 | 95.2 | 3.8 | 1.31 | 1.0 | 0.01 | 89 | 89 |
| Ex. 7 | 86.8 | 3.5 | 1.12 | 9.7 | 0.04 | 93 | 92 |
| Comp. Ex. 1 | 90.6 | 3.6 | 1.1 | 5.8 | 0 | 81 | 80 |
| Comp. Ex. 2 | 94.3 | 3.8 | 1.29 | 1.9 | 0 | 80 | 81 |
| Comp**.** Ex. 3 | 96.1 | 3.9 | 1.85 | 0.0 | 0.04 | 83 | 84 |
| Comp**.** Ex. 4 | 96.1 | 3.9 | 1.86 | 0.0 | 0.08 | 84 | 85 |
| Comp**.** Ex. 5 | 93.4 | 3.7 | 0.7 | 2.9 | 0.04 | 80 | 83 |
| Comp. Ex. 6 | 93.4 | 3.7 | 1.6 | 2.9 | 0.04 | 85 | 85 |
| Comp. Ex. 7 | 82.2 | 3.3 | 1.3 | 14.5 | 0 | 75 | 85 |
| Comp. Ex. 8 | 96.1 | 3.9 | - | 0.0 | 0.1 | 80 | 84 |

In Table 1, the content of the Mg-containing silicon oxide, the content of the carbon coating layer and the content of the graphene coating layer are calculated based on "the total weight of the Mg-containing silicon oxide having the carbon coating layer and the graphene coating layer formed thereon", and the content of the SW-CNT is calculated based on the total weight of the negative electrode active material layer.

Referring to Table 1, in the case of the secondary batteries, including single-walled carbon nanotubes as a conductive material and using a negative electrode active material including a carbon coating layer and a graphene coating layer satisfying the condition of a D/G band intensity ratio of the graphene contained in the graphene coating layer ranging from 0.8 to 1.5 according to Examples 1-7, it can be seen that each secondary battery shows a high 60°C high-temperature (8 weeks) capacity retention and a high temperature (45°C) capacity retention (300^{th} cycle), corresponding to 89% or higher, as compared to the secondary batteries according to Comparative Examples 1-8.

## Claims

1. A negative electrode, comprising:
a current collector; and
a negative electrode active material layer disposed on at least one surface of the current collector, and comprising: 1) a negative electrode active material comprising a Mg-containing silicon oxide, a carbon coating layer surrounding the surface of the Mg-containing silicon oxide and a graphene coating layer surrounding the surface of the carbon coating layer, 2) a conductive material comprising single-walled carbon nanotubes (SWCNTs), and 3) a binder,
wherein the graphene contained in the graphene coating layer has a D/G band intensity ratio of 0.8-1.5, and
the D/G band intensity ratio of the graphene is defined as an average value of the ratio of the maximum peak intensity of D band at 1360 ± 50 cm⁻¹ based on the maximum peak intensity of G band at 1580 ± 50 cm⁻¹, as determined by Raman spectroscopy of graphene, determined as reported in the description;
**characterized in that** the content of the single-walled carbon nanotubes is 0.01-0.06 wt% based on the total weight of the negative electrode active material layer.

2. The negative electrode according to claim 1, wherein the graphene contained in the graphene coating layer has a D/G band intensity ratio of 0.8-1.4.

3. The negative electrode according to claim 1, wherein the Mg-containing silicon oxide comprises 4-15 wt% of Mg.

4. The negative electrode according to claim 1, wherein the content of the graphene coating layer is 0.5~10 wt% based on the total weight of the negative electrode active material.

5. The negative electrode according to claim 1, wherein the content of the carbon coating layer is 0.5-10 wt% based on the total weight of the negative electrode active material.

6. The negative electrode according to claim 1, wherein the conductive material further comprises carbon black, acetylene black, ketjen black, carbon nanofibers, channel black, furnace black, lamp black, thermal black, carbon fibers, metal fibers, fluorocarbon, metal powder, conductive whisker, conductive metal oxide, polyphenylene derivative, or two or more of them.

7. The negative electrode according to claim 1, wherein the negative electrode active material layer further comprises a carbonaceous active material.

8. The negative electrode according to claim 7, wherein the carbonaceous active material comprises artificial graphite, natural graphite, graphitizable carbon fibers, graphitizable mesocarbon microbeads, petroleum cokes, baked resin, carbon fibers, pyrolyzed carbon, or two or more of them.

9. A lithium secondary battery comprising the negative electrode as defined in any one of claims 1 to 8.

## Patentansprüche

1. Negative Elektrode, umfassend:
einen Stromabnehmer; und
eine Negativelektrodenaktivmaterialschicht, die auf mindestens einer Oberfläche des Stromabnehmers angeordnet ist und folgendes umfasst: 1) ein Negativelektrodenaktivmaterial, das ein Mg-haltiges Siliziumoxid, eine Kohlenstoffbeschichtungsschicht, die die Oberfläche des Mghaltigen Siliziumoxids umgibt, und eine Graphenbeschichtungsschicht, die die Oberfläche der Kohlenstoffbeschichtungsschicht umgibt, umfasst, 2) ein leitfähiges Material, das einwandige Kohlenstoffnanoröhren (SWCNTs) umfasst, und 3) ein Bindemittel,
wobei das in der Graphenbeschichtungsschicht enthaltene Graphen ein D/G-Bandintensitätsverhältnis von 0,8-1,5 aufweist, und
das D/G-Bandintensitätsverhältnis des Graphens als Durchschnittswert des Verhältnisses der maximalen Peakintensität des D-Bandes bei 1360 ± 50 cm⁻¹, bezogen auf die maximale Peakintensität des G-Bandes bei 1580 ± 50 cm⁻¹, definiert ist, wie durch Raman-Spektroskopie von Graphen bestimmt, wie in der Beschreibung angegeben;
**dadurch gekennzeichnet, dass** der Gehalt der einwandigen Kohlenstoffnanoröhren 0,01-0,06 Gew.-%, bezogen auf das Gesamtgewicht der Negativelektrodenaktivmaterialschicht, beträgt.

2. Negative Elektrode gemäß Anspruch 1, wobei das in der Graphenbeschichtungsschicht enthaltene Graphen ein D/G-Bandintensitätsverhältnis von 0,8-1,4 aufweist.

3. Negative Elektrode gemäß Anspruch 1, wobei das Mghaltige Siliziumoxid 4-15 Gew.-% Mg umfasst.

4. Negative Elektrode gemäß Anspruch **1,** wobei der Gehalt der Graphenbeschichtungsschicht 0,5∼10 Gew.-%, bezogen auf das Gesamtgewicht des Negativelektrodenaktivmaterials, beträgt.

5. Negative Elektrode gemäß Anspruch **1,** wobei der Gehalt der Kohlenstoffbeschichtungsschicht 0,5-10 Gew.-%, bezogen auf das Gesamtgewicht des Negativelektrodenaktivmaterials, beträgt.

6. Negative Elektrode gemäß Anspruch **1,** wobei das leitfähige Material ferner Ruß, Acetylenruß, Ketjenruß, Kohlenstoffnanofasern, Kanalruß, Ofenruß, Lampenruß, Thermoruß, Kohlenstofffasern, Metallfasern, Fluorkohlenstoff, Metallpulver, leitfähige Whisker, leitfähiges Metalloxid, Polyphenylenderivat oder zwei oder mehr davon umfasst.

7. Negative Elektrode gemäß Anspruch 1, wobei die Negativelektrodenaktivmaterialschicht ferner ein kohlenstoffhaltiges Aktivmaterial umfasst.

8. Negative Elektrode gemäß Anspruch 7, wobei das kohlenstoffhaltige Aktivmaterial künstlichen Graphit, natürlichen Graphit, graphitisierbare Kohlenstofffasern, graphitisierbare Mesokohlenstoff-Mikrokügelchen, Petrolkoks, gebackenes Harz, Kohlenstofffasern, pyrolysierten Kohlenstoff oder zwei oder mehr davon umfasst.

9. Lithium-Sekundärbatterie, die die in mindestens einem der Ansprüche 1 bis 8 definierte negative Elektrode umfasst.

## Revendications

1. Une électrode négative, comprenant :
un collecteur de courant ; et
une couche de matériau actif d'électrode négative disposée sur au moins une surface du collecteur de courant, et comprenant : 1) un matériau actif d'électrode négative comprenant un oxyde de silicium contenant du Mg, une couche de revêtement de carbone entourant la surface de l'oxyde de silicium contenant du Mg et une couche de revêtement de graphène entourant la surface de la couche de revêtement de carbone, 2) un matériau conducteur comprenant des nanotubes de carbone à paroi simple (SWCNT), et 3) un liant,
dans laquelle le graphène contenu dans la couche de revêtement de graphène a un rapport d'intensité des bandes D/G de 0,8 à 1,5, et
le rapport d'intensité des bandes D/G du graphène étant défini comme la valeur moyenne du rapport entre l'intensité maximale de la bande D à 1360 ± 50 cm⁻¹ et l'intensité maximale de la bande G à 1580 ± 50 cm⁻¹, déterminé par spectroscopie Raman du graphène, tel que décrit dans la description ;
**caractérisée en ce que** la teneur en nanotubes de carbone à paroi simple est comprise entre 0,01 et 0,06 % en poids par rapport au poids total de la couche de matériau actif de l'électrode négative.

2. L'électrode négative selon la revendication 1, dans laquelle le graphène contenu dans la couche de revêtement en graphène présente un rapport d'intensité des bandes D/G de 0,8-1,4.

3. L'électrode négative selon la revendication **1,** dans laquelle l'oxyde de silicium contenant du Mg comprend **4-**15 % en poids de Mg**.**

4. L'électrode négative selon la revendication **1,** dans laquelle la teneur de la couche de revêtement de graphène est 0,5~10 % en poids par rapport au poids total du matériau actif de l'électrode négative.

5. L'électrode négative selon la revendication **1,** dans laquelle la teneur de la couche de revêtement de carbone est 0,5-10 % en poids par rapport au poids total du matériau actif de l'électrode négative.

6. L'électrode négative selon la revendication **1,** dans laquelle le matériau conducteur comprend en outre du noir de carbone, du noir d'acétylène, du noir de ketjen, des nanofibres de carbone, du noir de canal, du noir de four, du noir de lampe, du noir thermique, des fibres de carbone, des fibres métalliques, du fluorocarbone, de la poudre métallique, des whiskers conducteurs, un oxyde métallique conducteur, un dérivé de polyphénylène, ou deux ou plusieurs de ceux-ci.

7. L'électrode négative selon la revendication **1,** dans laquelle la couche de matériau actif de l'électrode négative comprend en outre un matériau actif carboné.

8. L'électrode négative selon la revendication **7,** dans laquelle le matériau actif carboné comprend du graphite artificiel, du graphite naturel, des fibres de carbone graphitisables, des microbilles de mésocarbone graphitisables, du coke de pétrole, de la résine cuite, des fibres de carbone, du carbone pyrolysé, ou deux ou plusieurs de ceux-ci.

9. Une batterie secondaire au lithium comprenant l'électrode négative telle que définie dans l'une quelconque des revendications 1 à 8.
